# EUROPÄISCHE PATENTSCHRIFT

(11) **EP 0 800 893 B1**
(45) Veröffentlichungstag und Bekanntmachung des Hinweises auf die Patenterteilung: **02.11.2006**
(21) Anmeldenummer: 97102931.9
(22) Anmeldetag: 22.02.1997
(51) Int. Cl.: B23Q 7/04

(54) **Werkzeugmaschine mit einem Arbeitsraum**
Machine tool with a workspace
Machine-outil avec une espace de travail

(30) Priorität: 10.04.1996 DE 19614143
(43) Veröffentlichungstag der Anmeldung: 15.10.1997
(73) Patentinhaber: Chiron-Werke GmbH & Co. KG, 78532 Tuttlingen (DE)
(72) Erfinder: Schweizer, Anton, 78573 Wurmlingen (DE); Deufel, Karl, 78600 Kolbingen (DE)
(74) Vertreter: Otten, Hajo

(56) Entgegenhaltungen:
- EP-A- 0 052 149
- EP-A- 0 289 333
- EP-A- 0 415 153
- EP-A- 0 573 678
- DE-A- 2 658 146
- DE-A- 2 951 565

## Beschreibung

Die vorliegende Erfindung betrifft eine Werkzeugmaschine mit einem Arbeitsraum, in dem eine Aufnahme für zu bearbeitende Werkstücke vorgesehen ist, die nach Beendigung eines Bearbeitungsprozesses ausgewechselt werden, wobei in dem Arbeitsraum eine Entnahmevorrichtung für Werkstücke vorgesehen ist.

Derartige Werkzeugmaschinen sind aus der EP 0 052 149 A1 bekannt.

Bei der bekannten Werkzeugmaschine ist die Entnahmevorrichtung eine automatische Werkstückwechselvorrichtung, die ein Werkstück zwischen der in dem Arbeitsraum vorhandenen Aufnahme und einem Werkstückmagazin außerhalb des Arbeitsraumes automatisch wechseln kann.

Weiter bekannte Werkzeugmaschinen weisen in der Regel eine Verkleidung auf, durch die der Arbeitsraum nach außen hin abgeschlossen ist, um so die Umgebung und das Bedienungspersonal vor umherfliegenden Spänen sowie Bohrwasser zu schützen. In der Verkleidung ist eine durch eine Bedienertür verschließbare Öffnung vorgesehen, durch die hindurch zu bearbeitende Werkstücke gegen bereits bearbeitete Werkstücke ausgetauscht werden.

In der Regel weisen die bekannten Werkzeugmaschinen einen Werkstücktisch auf, auf dem eine Aufnahme zum Einspannen der zu bearbeitenden Werkstücke vorgesehen ist. Wenn ein Bearbeitungsprozeß beendet ist, wird die Bedienertür entweder automatisch oder von einer Bedienungsperson geöffnet, wobei die Aufnahme entweder automatisch oder durch Manipulationen seitens der Bedienungsperson so geöffnet wird, daß das Werkstück entnehmbar ist.

Die Bedienungsperson reinigt nun zunächst mittels einer von Hand zu bedienenden Spülpistole das noch auf der Aufnahme befindliche Werkstück und entnimmt dieses dann aus dem Arbeitsraum. Daraufhin wird von der Bedienungsperson die Aufnahme von Spänen gereinigt, bevor dann in einem dritten Arbeitsvorgang ein neues Werkstück auf die Aufnahme aufgelegt wird.

Ingesamt muß eine Bedienungsperson also dreimal in den Arbeitsraum eingreifen, um ein Werkstück auszuwechseln. Diese Arbeitsvorgänge sind nicht nur körperlich anstrengend, sie sind auch mit starker Verschmutzung verbunden, da das gespülte Werkstück unmittelbar durch die Bedienungsperson von der Aufnahme abgenommen und aus dem Arbeitsraum entfernt wird. Dabei kommt es zu Verschmutzungen einmal der Bedienungsperson und zum anderen der Umgebung außerhalb der Werkzeugmaschine infolge des abtropfenden Bohrwassers.

Neben der körperlichen Anstrengung und der Verschmutzung ist bei derartigen Werkzeugmaschinen weiter von Nachteil, daß die oben erwähnten drei Arbeitsvorgänge erforderlich sind, um ein bearbeitetes Werkstück gegen ein noch zu bearbeitendes Werkstück auszutauschen. Da diese drei Manipulationen von Hand durchgeführt werden, stellen sie den geschwindigkeitsbestimmenden Schritt bei der Bestimmung der Werkstück-zu-Werkstück-Zeit dar. Insbesondere bei Akkordarbeit setzt dies die Bedienungspersonen zusätzlich unter starken Leistungsdruck, wodurch Fehler und Nachlässigkeit insbesondere beim Spülen des Werkstückes sowie der Aufnahme unvermeidlich ist.

Ein weiterer Nachteil ergibt sich damit infolge der manuellen Bedienung insofern, als durch nicht vollständig gereinigte Aufnahmen z.B. verbleibende Späne dazu führen können, daß das neu eingespannte Werkstück nicht lagerichtig in der Aufnahme sitzt, so daß es zu Abweichungen bei der Bearbeitungsgenauigkeit kommt.

Einige dieser Nachteile können dadurch vermieden werden, daß automatische Werkstückwechselvorrichtungen verwendet werden, die jedoch mit einer ganzen Reihe von Nachteilen verbunden sind. Neben dem sehr hohen Kostenfaktor stellen diese Werkstückwechselvorrichtungen auch insofern einen Nachteil dar, als sie hochqualifiziertes Personal erfordern, wobei die Akzeptanz dieser hochgradig automatisierten Werkzeugmaschinen in der Praxis relativ gering ist.

Ein weiterer Nachteil bei automatischen Werkstückwechslern liegt darin, daß diese Werkstückwechsler durch die übliche Bedienertür hindurch arbeiten, so daß im Falle von Wartungsarbeiten an der Werkzeugmaschine nicht nur die Gefahr von Kollisionen mit der Werkstückwechselvorrichtung besteht, die Zugänglichkeit des Arbeitsraumes wird durch diese Vorrichtungen auch deutlich verschlechtert.

Vor diesem Hintergrund ist es Aufgabe der vorliegenden Erfindung, die eingangs genannte Werkzeugmaschine derart weiterzubilden, daß bei geringem konstruktivem Aufwand ein schneller und sicherer Werkstückwechsel auf bedienerfreundliche Weise von Hand möglich ist.

Erfindungsgemäß wird diese Aufgabe dadurch gelöst, daß die Entnahmevorrichtung nach Beendigung des Bearbeitungsprozesses das bearbeitete Werkstück aus der Aufnahme entnimmt und zu dieser beabstandet im Arbeitsraum zur Entnahme durch eine Bedienungsperson bereithält.

Die der Erfindung zugrundeliegende Aufgabe wird auf diese Weise vollkommen gelöst.

Die Erfinder der vorliegenden Anmeldung haben nämlich erkannt, daß es durch eine derartige Entnahmevorrichtung möglich ist, das bearbeitete Werkstück nach Beendigung des Bearbeitungsprozesses automatisch zu der Aufnahme zu beabstanden, es aber in dem Arbeitsraum zu belassen, von wo es durch eine Bedienungsperson entnommen wird, nachdem diese zuvor ein neues Werkstück auf die Aufnahme aufgelegt hat. In einem einzige Arbeitsgang ist es jetzt möglich, das neue Werkstück auf die Aufnahme aufzulegen und sozusagen beim Zurückziehen aus dem Arbeitsraum das bereits bearbeitete Werkstück mitzunehmen.

Da das bearbeitete Werkstück zu der Aufnahme beabstandet in dem Arbeitsraum gehalten wird, kann während dieser Zwischenlagerung das Bohrwasser abtropfen, so daß auch das Verschmutzungsproblem deutlich reduziert wird.

Wegen der verringerten Zahl der Arbeitsvorgänge beim Werkstückwechsel ergibt sich auch eine deutlich kürzere Werkstück-zu-Werkstück-Zeit, so daß mit der neuen Werkzeugmaschine insgesamt pro Zeiteinheit eine größere Anzahl von Werkstücken bearbeitet werden kann, ohne daß dies zu stärkeren Belastungen des Bedienungspersonal führt. Im Gegenteil, die neue Werkzeugmaschine ist sogar deutlich bedienungsfreundlicher als die bekannte Werkzeugmaschine, da die Zahl der Arbeitsvorgänge geringer ist.

In einer Weiterbildung ist es dann bevorzugt, wenn eine automatische Spülvorrichtung vorgesehen ist, die das bearbeitete Werkstück und/oder nach dessen Entnahme aus der Aufnahme die Aufnahme selbst spült.

Hier ist von Vorteil, daß sich die Zahl der Arbeitsvorgänge, die das Bedienungspersonal zum Werkstückwechsel ausführen muß, auf einen Vorgang reduziert. Nach Beendigung des Arbeitsprozesses wird zunächst das noch in der Aufnahme befindliche, bearbeitete Werkstück gespült, bevor es dann nach automatischem Öffnen der Aufnahme durch die Entnahmevorrichtung von der Aufnahme abgenommen wird. Daraufhin wird dann noch die Aufnahme selbst gespült. Da diese Spülprozesse automatisch erfolgen, geschieht der ganze Spülvorgang mit einer hohen Reproduzierbarkeit, so daß die Gefahr von verbleibenden Spänen an dem bearbeiteten Werkstück und/oder der Aufnahme deutlich verringert wird, was insgesamt zu einer höheren Genauigkeit der Bearbeitung bei der neuen Werkzeugmaschine führt.

Nachdem diese Spülvorgänge abgeschlossen wurden, wird die Bedienertür geöffnet, woraufhin die Bedienungsperson dann ein neues Werkstück auf die Aufnahme auflegt, wo es vorzugsweise automatisch eingespannt wird. Im selben Arbeitsgang ergreift die Bedienungsperson dann das in der Entnahmevorrichtung befindliche Werkstück und "zieht" sich zusammen mit dem bearbeiteten Werkstück aus dem Arbeitsraum zurück. Mit anderen Worten, es ist nur noch ein Arbeitsvorgang erforderlich, um ein Werkstück an der neuen Werkzeugmaschine auszutauschen, so daß ein noch schnellerer und sicherer Werkstückwechsel möglich wird.

Verglichen mit automatischen Werkstückwechselvorrichtungen, die - wie oben beschrieben - durch die Bedienertür arbeiten, ist die hier neu geschaffene Entnahmevorrichtung nicht nur deutlich preiswerter und konstruktiv einfacher aufgebaut, wegen ihrer Anordnung im Inneren des Arbeitsraumes der Werkzeugmaschine kann es darüber hinaus nicht zu Kollisionen mit dem Bedienungspersonal kommen, so daß auch die Betriebssicherheit der neuen Werkzeugmaschine gegenüber bekannten Werkzeugmaschinen mit automatischen Werkstückwechselvorrichtungen erhöht ist.

Weil zum Werkstückwechseln nur noch einfache Manipulationen erforderlich sind, ist die Akzeptanz dieser neuen Werkzeugmaschine zudem sehr hoch, wobei besonders darauf hinzuweisen ist, daß auch kein besonders geschultes Personal erforderlich ist. Die letzteren Vorteile führen dazu, daß die Werkstückkosten reduziert werden können.

In einer Weiterbildung ist es dann bevorzugt, wenn die Entnahmevorrichtung von oben, vorzugsweise von schräg oben auf das in der Aufnahme befindliche, bearbeitete Werkstück zugreift.

Hier ist von Vorteil, daß die neue Entnahmevorrichtung auch bei bestehenden Werkzeugmaschinen nachgerüstet werden kann, ohne daß konstruktive Veränderungen insbesondere an dem Werkstücktisch erforderlich sind. Oberhalb des Werkstücktisches ist nämlich in der Regel in jeder Werkzeugmaschine noch ein gewisser redundanter Platz vorhanden, in dem die Entnahmevorrichtung angeordnet werden kann. Wenn die Entnahmevorrichtung dabei schräg von oben auf das bearbeitete Werkstück zugreift, kann durch diese Anordnung dafür gesorgt werden, daß es nicht zu Kollisionen mit dem Spindelkopf der Werkzeugmaschine kommt, der zum Bearbeiten der Werkstücke in bekannter Weise verschiedene Positionen in dem Arbeitsraum anfahren muß.

Von besonderem Vorteil ist diese Anordnung jedoch bei Werkzeugmaschinen, die einen Werkstücktisch aufweisen, der in eine Bestückungs- sowie eine Bearbeitungsseite aufgeteilt ist. Bei derartigen Werkzeugmaschinen erfolgt der Werkstückwechsel auf dem Werkstücktisch entweder dadurch, daß der Werkstücktisch um 180° hin- und wieder hergedreht wird, oder aber dadurch, daß eine relative Längsbewegung zwischen Werkstücktisch und Spindelstock erfolgt, wie dies bei sogenannten Langbettmaschinen der Fall ist.

In all diesen Fällen, in denen der Werkstücktisch zwischen der Bearbeitung zweier Werkstücke verfahren wird, ist es besonders einfach, die neue Entnahmevorrichtung von oben zugreifen zu lassen, da dann keine konstruktiven Änderungen an dem Werkstücktisch selbst vorgenommen werden müssen.

Allgemein ist es bevorzugt, wenn die Entnahmevorrichtung eine Haltevorrichtung für das Werkstück umfaßt, die mittels einer Zustellvorrichtung zwischen einer Eingriffsposition an der Aufnahme und einer Ruheposition oberhalb der Aufnahme verstellbar ist, wobei die Haltevorrichtung vorzugsweise beim Verstellen in die Eingriffsposition automatisch mit dem bearbeiteten Werkstück in Eingriff gelangt.

Diese Maßnahme ist konstruktiv von Vorteil, lediglich durch das Zustellen der Haltevorrichtung auf die Aufnahme zu gelangt diese in Eingriff mit dem bearbeiteten Werkstück, so daß beim Zurückziehen der Haltevorrichtung in die Ruheposition das Werkstück von der Aufnahme abgenommen wird. Weil die Ruheposition oberhalb der Aufnahme vorgesehen ist, ist diese für die Bedienungsperson zum Auflegen des nächsten Werkstückes frei zugänglich. Ein weiterer Vorteil der schräg von oben zugreifenden Entnahmevorrichtung ergibt sich hier dadurch, daß das Werkstück in der Ruheposition der Haltevorrichtung nicht unmittelbar senkrecht über der Aufnahme hängt, so daß abtropfendes Bohrwasser weder die Aufnahme noch die Bedienungsperson verschmutzen kann.

Besonders bevorzugt ist es dabei, wenn die Haltevorrichtung in ihrer Ruheposition das bearbeitete Werkstück frei hängend bereithält, wobei sie vorzugsweise zumindest einen federbelasteten Haken umfaßt, der beim Verstellen der Haltevorrichtung in die Eingriffsposition automatisch mit dem bearbeiteten Werkstück in Eingriff gelangt.

Hier ist von Vorteil, daß keine weiteren Manipulationen zur Entnahme des Werkstückes aus der Haltevorrichtung erforderlich sind, das Werkstück hängt sozusagen am Haken, von dem es entnommen werden kann. Wegen der geringen Zahl von Manipulationen, die die Bedienungsperson, die sich durch die Öffnung in den Arbeitsraum gebeugt hat, dort vornehmen muß, ermöglicht die so ausgerüstete neue Werkzeugmaschine einen noch schnelleren Werkstückwechsel.

Allgemein ist es bevorzugt, wenn die Entnahmevorrichtung eine Verriegelungsvorrichtung umfaßt, die die Haltevorrichtung in ihrer Ruheposition formschlüssig hält.

Diese Maßnahme ist unter sicherheitstechnischen Aspekten von Vorteil, sowohl mit als auch ohne aufgenommenem Werkstück wird die Haltevorrichtung in ihrer Ruheposition sicher gehalten, da der Formschluß nur aktiv aufgehoben werden kann. Hierzu kann z.B. ein Haken vorgesehen sein, der über eine Kolben-Zylinder-Einheit betätigt werden muß, um die Haltevorrichtung freizugeben. Dieser Haken kann federbelastet sein, so daß die Haltevorrichtung beim Anfahren ihrer Ruheposition automatisch formschlüssig ergriffen wird.

In diesem Zusammenhang ist es dann bevorzugt, wenn die Verriegelungsvorrichtung einen federbelasteten Haken umfaßt, der über eine Kolben-Zylinder-Einheit außer Eingriff mit der Haltevorrichtung bringbar ist.

Allgemein ist es bevorzugt, wenn die Entnahmevorrichtung zur gleichzeitigen Entnahme von zwei oder mehreren parallel bearbeiteten Werkstücken ausgelegt ist.

Hier ist von Vorteil, daß die Werkzeugmaschine zunächst die Werkstücke bearbeitet, bevor diese dann unter Zuhilfenahme der Entnahmevorrichtung ausgewechselt werden.

Weiter ist es bevorzugt, wenn die Zustellvorrichtung eine an der Werkzeugmaschine befestigte Tragekonstruktion aufweist, an der die Haltevorrichtung vorzugsweise über eine Kolben-Zylinder-Einheit zwischen zwei Endlagen verschiebbar gelagert ist, wobei die Entnahmevorrichtung vorzugsweise zumindest ein Dämpfungsglied aufweist, das die Haltevorrichtung beim Annähern an ihre Eingriffs- und/oder Ruheposition in ihrer Bewegung bedämpft.

Diese Maßnahme ist zum einen konstruktiv von Vorteil, die Kolben-Zylinder-Einheit fährt lediglich ihre Kolbenstange ein bzw. aus, wodurch die Haltevorrichtung zwischen ihren beiden Endstellungen hin- und herbewegt wird. Damit die Haltevorrichtung beim Anlaufen von Endanschlägen nicht zu stark prellt und keine Stöße verursacht, ist das Dämpfungsglied vorgesehen, das z.B. ein einfacher Stoßdämpfer sein kann. Der Vorteil bei der Verwendung dieses Dämpfungsgliedes besteht darin, daß trotz sehr schneller Bewegungen der Haltevorrichtung ein sanftes Abbremsen in den Endlagen möglich wird, so daß das frei hängende Werkstück nicht von dem Haken heruntergeschleudert werden kann.

Weiter ist es noch bevorzugt, wenn der Arbeitsraum durch eine Verkleidung abgeschlossen ist, in der eine mit einer Bedienertür verschließbare Öffnung vorgesehen ist, und wenn die Haltevorrichtung in ihrer Ruheposition das bearbeitete Werkstück im Bereich der Öffnung hält.

Hier ist von Vorteil, daß die Bedienungsperson nicht unnötig weit in den Arbeitsraum eingreifen muß, um nach dem Auflegen des neuen Werkstückes das bereits berarbeitete Werkstück zu ergreifen.

Ingesamt ermöglicht es die neue Werkzeugmaschine, einen Werkstückwechsel sehr schnell durchzuführen. Dazu trägt zum einen die erleichterte Bedienung der Werkzeugmaschine bei, wozu nur noch ein Arbeitsvorgang je Werkzeugwechsel erforderlich ist. Zum anderen wird die Werkstückwechselzeit dadurch verringert, daß die Entnahmevorrichtung sehr schnell arbeiten kann, wozu insbesondere die zum Antrieb verwendete Kolben-Zylinder-Einheit mit dem Dämpfungsglied beiträgt.

Verglichen mit bekannten Werkzeugmaschinen, die automatische Werkstückwechselvorrichtungen umfassen, ergibt sich bei der neuen Werkzeugmaschine damit eine deutlich kürzere Werkstück-zu-Werkstück-Zeit, weil die automatischen Werkstückwechselvorrichtungen, die durch die Bedienertür in den Arbeitsraum eingreifen, wegen der komplizierten Bewegungen eine relativ lange Wechselzeit mit sich bringen.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: in einer schematischen Seitenansicht die neue Werkzeugmaschine mit Entnahmevorrichtung für Werkstücke;
- Fig. 2: eine Draufsicht auf die Entnahmevorrichtung in Fig. 1 von rechts gesehen; und
- Fig. 3: einen bei der Entnahmevorrichtung aus den Fig. 1 und 2 eingesetzten, federbelasteten Haken.

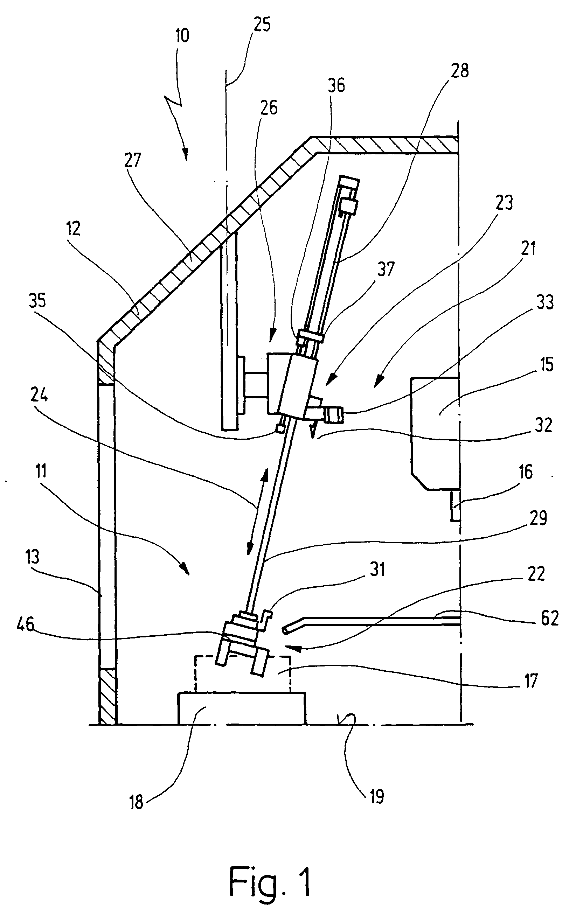

In Fig. 1 ist mit 10 allgemein eine sehr schematisch angedeutete Werkzeugmaschine bezeichnet, die einen Arbeitsraum 11 aufweist, der durch eine Verkleidung 12 abgeschlossen ist. In der Verkleidung 12 ist eine Öffnung 13 vorgesehen, die üblicherweise durch eine Bedienertür verschlossen ist, die aus Gründen der Übersichtlichkeit in Fig. 1 nicht gezeigt ist.

In dem Arbeitsraum 11 befindet sich ein ebenfalls nur schematisch angedeuteter Spindelstock 15 mit einem Werkzeug 16 zum Bearbeiten eines ebenfalls schematisch angedeuteten Werkstückes 17, das in einer Aufnahme 18 aufgenommen ist. Diese Aufnahme 18 befindet sich auf einem andeutungsweise dargestellten Werkstücktisch 19.

In an sich bekannter Weise kann der Spindelstock 15 relativ zu dem Werkstück 17 in allen drei Richtungen des kartesischen Koordinatensystems im Inneren des Arbeitsraumes 11 verfahren werden, um beliebige Arbeitsvorgänge an dem Werkstück 17 durchzuführen.

Sobald dieser Bearbeitungsprozeß beendet ist, kommt eine Entnahmevorrichtung 21 zum Einsatz, die mit einer Haltevorrichtung 22 von schräg oben auf das in der Aufnahme 18 befindliche Werkstück 17 zugreift. Zu diesem Zweck ist eine Zustellvorrichtung 23 für die Haltevorrichtung 22 vorgesehen, die diese in Richtung eines Doppelpfeiles 24 bewegt. In Fig. 1 greift die Entnahmevorrichtung von schräg rechts oben auf das Werkstück 17 zu, wobei es jedoch auch möglich ist, sie um eine Hochachse 25 um 180° gedreht anzuordnen, so daß sie von schräg links oben nach rechts unten auf das Werkstück 17 zu fährt.

In der in Fig. 1 gezeigten Stellung befindet sich die Entnahmevorrichtung 22 in ihrer unteren Eingriffsposition, in der sie auf noch zu beschreibende Weise automatisch mit dem Werkstück 17 in Eingriff gelangt. Die Haltevorrichtung 22 wird dann durch die Zustellvorrichtung 23 in Richtung des Pfeiles 24 nach oben bewegt, wo sie ihre Ruheposition oberhalb von der Aufnahme 18 und zu dieser versetzt erreicht.

Die Zustellvorrichtung 23 umfaßt eine Tragekonstruktion 26, die an einer Wand 27 der Werkzeugmaschine 10 befestigt ist. An dieser Tragekonstruktion 26 sitzt eine Kolben-Zylinder-Einheit 28, deren Kolbenstange 29 mit der Haltevorrichtung 22 verbunden ist.

Zwischen der Haltevorrichtung 22 und der Zustellvorrichtung 23 ist eine Verriegelungsvorrichtung vorgesehen, die einen Haken 31 an der Haltevorrichtung 22 sowie einen weiteren Haken 32 im Bereich der Tragekonstruktion 26 umfaßt. Während der Haken 31 starr angeordnet ist, ist der Haken 32 federbelastet und weicht beim Anfahren durch den Haken 31 in Fig. 1 nach rechts aus, bis er in die in Fig. 1 gezeigte Stellung zurückschnappen kann, wobei dann die beiden Haken 31 und 32 in Eingriff miteinander sind. Auf diese Weise wird die Haltevorrichtung 22 in der Ruheposition formschlüssig gehalten.

Zum Entriegeln ist eine in Fig. 1 schematisch angedeutete Kolben-Zylinder-Einheit 33 vorgesehen, die den Haken 32 in Fig. 1 wieder nach rechts schwenkt, wenn die Kolbenstange 29 ausgefahren werden soll, um die Haltevorrichtung 22 in ihre Eingriffsposition zu bringen, in der sie automatisch mit dem Werkstück 17 in Eingriff gelangt.

An der Tragekonstruktion 26 sind noch zwei Dämpfungsglieder 35, 36 dargestellt, die im einfachsten Falle Stoßdämpfer sind. Das untere Dämpfungsglied 35 gelangt in Anlage mit der Haltevorrichtung 22, wenn diese sich in ihre Ruheposition bewegt, und sorgt so für eine Bedämpfung der Bewegung der Haltevorrichtung 22 in Fig. 1 nach schräg rechts oben, so daß diese sanft abgebremst wird. Auf diese Weise wird verhindert, daß es zu starken Stößen kommt, die dazu führen könnten, daß die Haltevorrichtung 22 das aufgenommene Werkstück 17 verliert.

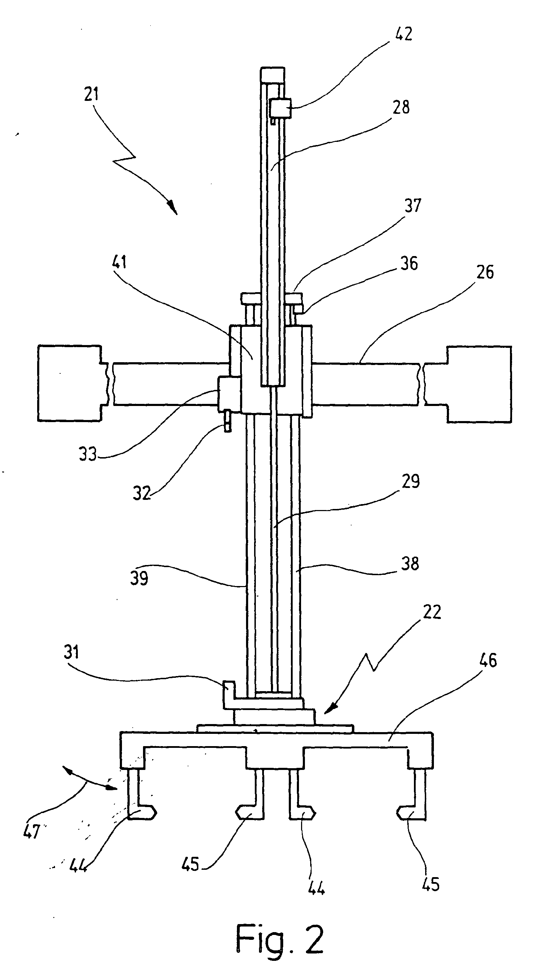

Das obere Dämpfungsglied 36 wirkt mit einer Traverse 37 zusammen, deren Funktion besser in Fig. 2 erkennbar ist.

In Fig. 2 ist die Entnahmevorrichtung 21 aus Fig. 1 in einer Draufsicht von rechts dargestellt. Es ist zu erkennen, daß die Traverse 37 zwei Führungsstangen 38, 39 an ihrem oberen Ende miteinander verbindet, wobei diese Führungsstangen 38, 39 in einem Führungsteil 41 geführt sind, das Teil der Tragekonstruktion 26 ist.

Die beiden Führungsstangen 38 und 39 sind zu beiden Seiten der Kolbenstange 29 angeordnet und sorgen für eine größere mechanische Steifigkeit der Zustellvorrichtung 23, so daß auch schwere, aufgenommene Werkstücke nicht dazu führen, daß die Kolbenstange 29 auf Biegung beansprucht wird.

Am oberen Ende der Kolben-Zylinder-Einheit 28 ist noch ein weiterer Endschlag 42 vorgesehen, den die Traverse 37 erreicht, wenn das untere Dämpfungsglied 35 völlig eingefahren wurde.

Die Haltevorrichtung 22 umfaßt zwei Paare von Haken 44, 45, die an einem Querträger 46 in Richtung eines Pfeiles 47 schwenkbar angeordnet sind. Je zwei Haken 44, 45 dienen zum Ergreifen eines bearbeiteten Werkstückes 17. Es sei noch bemerkt, daß je nach der Form der zu ergreifenden Werkstücke 17 auch ein einziger Haken ausreichen kann, der in eine entsprechende Öffnung des Werkstückes eingreift und dieses pendelnd aufhängt, so daß es von der Bedienungsperson einfach entnommen werden kann.

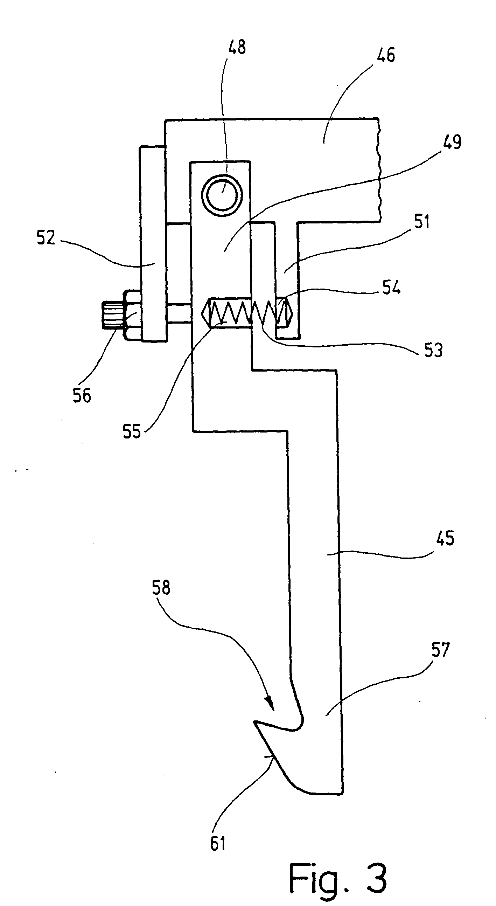

In Fig. 3 ist in einem Ausführungsbeispiel gezeigt, wie der Haken 45 an dem Querträger 46 angelenkt ist.

Der Haken 45 ist über ein Schwenklager 48, das an seinem oberen Ende 49 angreift, schwenkbar an dem Querträger 46 angeordnet. Beidseits des oberen Endes 49 des Hakens 45 erstrecken sich zwei Ausleger 51 und 52 von dem Querträger 46 nach unten. Zwischen dem Ausleger 51 und dem oberen Ende 49 des Hakens 45 ist eine Druckfeder 53 vorgesehen, die einen Endes in einem Sackloch 54 in dem Ausleger 51 und anderen Endes in einem Sackloch 55 in dem oberen Ende 49 des Hakens 45 sitzt. Auf diese Weise wird der Haken 45 in Fig. 3 nach links gedrückt.

Auf der gegenüberliegenden Seite des oberen Endes 49 des Hakens 45 greift eine Stellschraube 56 an, die in dem zweiten Ausleger 52 sitzt. Durch die Stellschraube 56 wird die Endposition des Hakens 45 festgelegt, in die er durch die Druckfeder 53 gedrückt wird.

An seinem unteren Ende 57 weist der Haken 45 eine Einbuchtung 58 zum pendelnden Aufhängen eines Werkstückes auf. Von der Einbuchtung 58 abgelegen und in Fig. 3 nach unten weisend ist eine Führungsschräge 61 vorgesehen, die derart geneigt verläuft, daß ein Druck auf diese Führungsschräge 61 dazu führt, daß der Haken in Fig. 3 gegen die Kraft der Druckfeder 53 nach rechts geschwenkt wird. Diese Führungsschräge 61 dient dazu, daß der Haken beim Zustellen zu einem aufzunehmenden Werkstück automatisch ausgeschwenkt wird, wozu die Führungsschräge 61 an einer Fläche oder Kante des Werkstückes 17 entlang gleitet. Sobald der Haken 45 weit genug in das Werkstück 17 eingetaucht ist, kommt die Führungsschräge 61 wieder frei und der Haken schwenkt in die in Fig. 3 gezeigte Stellung zurück, wobei die Ausbuchtung 58 in Eingriff mit einem entsprechenden Vorsprung des Werkstückes gelangt.

Die insoweit beschriebene, automatische Entnahmevorrichtung 21 ermöglicht es nun, daß nach dem Bearbeiten eines Werkstückes 17 dieses von der z.B. automatisch freigegebenen Aufnahme 18 entnommen und oberhalb und zu dieser versetzt gehalten wird, bis eine Bedienungsperson durch die Öffnung 13 hindurch zunächst ein neues Werkstück 17 auf die Aufnahme 18 aufgelegt hat, bevor sie das bereits bearbeitete Werkstück 17 von dem Haken 44, 45 entnimmt.

Zurückkehrend zu Fig. 1 sei noch auf eine Spülvorrichtung 62 hingewiesen, die dort lediglich schematisch angedeutet ist. Diese Spülvorrichtung kommt zum Einsatz, wenn die Bearbeitung des Werkstückes 17 beendet wurde, um zunächst das Werkstück 17 von Bohrspänen zu reinigen. Danach entnimmt die Entnahmevorrichtung 21 das Werkstück 17 von der Aufnahme 18, die daraufhin ebenfalls von der Spülvorrichtung 62 gereinigt wird. Erst jetzt wird die Bedienertür geöffnet, woraufhin der oben bereits beschriebene manuelle Werkstückwechsel möglich ist.

Weil das bearbeitete, in der Ruheposition der Haltevorrichtung 22 befindliche Werkstück 17 nicht unmittelbar über der Aufnahme 18 liegt, kann diese durch von dem Werkstück 17 herunterfallende Späne oder abtropfendes Bohrwasser nicht verunreinigt werden. Wegen dieser versetzten Anordnung wird auch eine Bedienungsperson nicht verschmutzt, die ein neues Werkstück auf die Aufnahme 18 auflegt. Wenn die Bedienungsperson schließlich das Werkstück 17 aus der Haltevorrichtung 22 entnimmt, ist der größte Teil des Bohrwassers von diesem Werkstück 17 abgetropft, so daß auch auf diese Weise eine Verschmutzung der Bedienungsperson vermieden wird.

## Patentansprüche

1. Werkzeugmaschine mit einem Arbeitsraum (11), in dem eine Aufnahme (18) für zu bearbeitende Werkstücke (17) vorgesehen ist, die nach Beendigung eines Bearbeitungsprozesses ausgewechselt werden, wobei in dem Arbeitsraum (11) eine Entnahmevorrichtung (21) für Werkstück (17) vorgesehen ist,
**dadurch gekennzeichnet, daß** die Entnahmevorrichtung (21) nach Beendigung des Bearbeitungsprozesses das bearbeitete Werkstück (17) aus der Aufnahme (18) entnimmt und zu dieser beabstandet im Arbeitsraum (11) zur Entnahme durch eine Bedienungsperson bereithält.

2. Werkzeugmaschine nach Anspruch 1, **dadurch gekennzeichnet, daß** die Entnahmevorrichtung (21) von oben auf das in der Aufnahme (18) befindliche, bearbeitete Werkstück (17) zugreift.

3. Werkzeugmaschine nach Anspruch 2, **dadurch gekennzeichnet, daß** die Entnahmevorrichtung (21) von schräg oben auf das in der Aufnahme (18) befindliche, bearbeitete werkstück (17) zugreift.

4. Werkzeugmaschine nach einem der Ansprüche 1 bis 3, **dadurch gekennzeichnet, daß** die Entnahmevorrichtung (21) eine Haltevorrichtung (22) für das Werkstück (17) umfaßt, die mittels einer Zustellvorrichtung (23) zwischen einer Eingriffsposition an der Aufnahme (18) und einer Ruheposition oberhalb der Aufnahme (18) verstellbar ist.

5. Werkzeugmaschine nach Anspruch 4, **dadurch gekennzeichnet, daß** beim Verstellen der Haltevorrichtung (22) in die Eingriffsposition diese automatisch mit dem bearbeiteten Werkstück (17) in Eingriff gelangt.

6. Werkzeugmaschine nach Anspruch 4 oder Anspruch 5, **dadurch gekennzeichnet, daß** die Haltevorrichtung (22) in ihrer Ruheposition das bearbeitete Werkstück (17) frei hängend bereithält.

7. Werkzeugmaschine nach einem der Ansprüche 4 bis 6, **dadurch gekennzeichnet, daß** die Haltevorrichtung (22) einen federbelasteten Haken (44, 45) umfaßt, der beim Verstellen der Haltevorrichtung (22) in die Eingriffsposition automatisch mit dem bearbeiteten Werkstück (17) in Eingriff gelangt.

8. Werkzeugmaschine nach einem der Ansprüche 4 bis 7, **dadurch gekennzeichnet, daß** die Entnahmevorrichtung (21) eine Verriegelungsvorrichtung (31, 32, 33) umfaßt, die die Haltevorrichtung (22) in ihrer Ruheposition formschlüssig hält.

9. Werkzeugmaschine nach Anspruch 8, **dadurch gekennzeichnet, daß** die Verriegelungsvorrichtung (31, 32, 33) einen federbelasteten Haken (32) umfaßt, der über eine Kolben-Zylinder-Einheit (33) außer Eingriff mit der Haltevorrichtung (22) bringbar ist.

10. Werkzeugmaschine nach einem der Ansprüche 1 bis 9, **dadurch gekennzeichnet, daß** die Entnahmevorrichtung (21) zur gleichzeitigen Entnahme von zwei oder mehreren parallel bearbeiteten Werkstücken (17) ausgelegt ist.

11. Werkzeugmaschine nach einem der Ansprüche 4 bis 10, **dadurch gekennzeichnet, daß** die Zustellvorrichtung (23) eine an der Werkzeugmaschine (10) befestigte Tragekonstruktion (26) aufweist, an der die Haltevorrichtung (22) vorzugsweise über eine Kolben-Zylinder-Einheit (28) zwischen zwei Endlagen verschiebbar gelagert ist.

12. Werkzeugmaschine nach einem der Ansprüche 4 bis 11, **dadurch gekennzeichnet, daß** die Entnahmevorrichtung (21) zumindest ein Dämpfungsglied (35, 36) aufweist, das die Haltevorrichtung (22) beim Annähern an ihre Eingriffs- und/oder Ruheposition in ihrer Bewegung bedämpft.

13. Werkzeugmaschine nach einem der Ansprüche 4 bis 12, **dadurch gekennzeichnet, daß** der Arbeitsraum (11) durch eine Verkleidung (12) abgeschlossen ist, in der eine mit einer Bedienungstür verschließbare Öffnung (13) vorgesehen ist, und die Haltevorrichtung (22) in ihrer Ruheposition das bearbeitete Werkstück (17) im Bereich der öffnung (13) hält.

14. Werkzeugmaschine nach einem der Ansprüche 1 bis 13, **dadurch gekennzeichnet, daß** eine automatische Spülvorrichtung (62) vorgesehen ist, die das bearbeitete Werkstück (17) und/oder nach dessen Entnahme aus der Aufnahme (18) die Aufnahme (18) spült.

## Claims

1. A machine tool having a working space (11) in which a receptacle (18) is provide for workpieces (17) to be machined and to be exchanged after completion of a machining process, wherein a removal mechanism (21) for workpieces (17) is provided in the working space (11),
**characterized in that** after completion of the machining process the removal mechanism (21) removes the machined workpiece (17) from the receptacle (18) and holds it ready at a distance therefrom in the working space (11) for removal by an operator.

2. The machine tool of claim 1, **characterized in that** the removal mechanism (21) grasps from above onto the machined workpiece (17) present in the receptacle (18).

3. The machine tool of claim 2, **characterized in that** the removal mechanism (21) grasps obliquely from above onto the machined workpiece (17) present in the receptacle (18).

4. The machine tool of anyone of claims 1 through 3, **characterized in that** the removal mechanism (21) comprises a holding mechanism (22) for the workpiece (17), which holding mechanism is shiftable by means of a displacement mechanism (23) between an engagement position at the receptacle (18) and a rest position above the receptacle (18).

5. The machine tool of claim 4, **characterized in that** upon shifting of the holding mechanism (22) into the engagement position the latter automatically comes into engagement with the machined workpiece (17).

6. The machine tool of claim 4 or claim 5, **characterized in that** the holding mechanism (22), in its rest position, makes the machined workpiece (17) available in freely hanging fashion.

7. The machine tool of anyone of claims 4 through 6, **characterized in that** the holding mechanism (22) comprises a spring-loaded hook (44, 45), which hook, upon shifting of the holding mechanism (22) into the engagement position, automatically comes into engagement with the machined workpiece (17).

8. The machine tool of anyone of claims 4 through 7, **characterized in that** the removal mechanism (21) comprises a locking mechanism (31, 32, 33) which holds the holding mechanism (22) positively in its rest position.

9. The machine tool of claim 8, **characterized in that** the locking mechanism (31, 32, 33) comprises a spring-loaded hook (32) that can be brought out of engagement with the holding mechanism (22) by means of a piston-cylinder unit (33).

10. The machine tool of anyone of claims 1 through 9, **characterized in that** the removal mechanism (21) is designed for simultaneous removal of two or more concurrently machined workpieces (17).

11. The machine tool of anyone of claims 4 through 10, **characterized in that** the displacement mechanism (23) has a support structure (26), attached to the machine tool (10), on which the holding mechanism (22) is mounted, preferably by means of a piston-cylinder unit (28), displaceably between two end locations.

12. The machine tool of anyone of claims 4 through 11, **characterized in that** the removal mechanism (21) has at least one damping member (35, 36) which damps the movement of the holding mechanism (22) as it approaches its engagement and/or rest position.

13. The machine tool of anyone of claims 4 through 12, **characterized in that** the working space (11) is closed off by cover panels (12) in which an opening (13) that is closable with an operator door is provided, and the holding mechanism (22), in its rest position, holds the machined workpiece (17) in the vicinity of the opening (13).

14. The machine tool of anyone of claims 1 through 13, **characterized in that** an automatic flushing apparatus (62) is provided which flushes the machined workpiece (17) and/or, after removal thereof from the receptacle (18), the receptacle (18).

## Revendications

1. Machine-outil comportant un compartiment de travail (11) dans lequel est prévu un logement (18) pour des pièces (17) à usiner qui sont échangées à l'achèvement d'un processus d'usinage, un dispositif de prélèvement (21) pour pièce (17) étant prévu dans le compartiment de travail (11),
**caractérisée en ce que**, à l'achèvement du processus d'usinage, le dispositif de prélèvement (21) prélève la pièce usinée (17) du logement (18) et la tient à distance de celui-ci dans le compartiment de travail (11), pour son prélèvement par un opérateur.

2. Machine-outil selon la revendication 1, **caractérisée en ce que** le dispositif de prélèvement (21) saisit depuis le haut la pièce usinée (17) se trouvant dans le logement (18).

3. Machine-outil selon la revendication 2, **caractérisée en ce que** le dispositif de prélèvement (21) saisit obliquement depuis le haut la pièce usinée (17) se trouvant dans le logement (18).

4. Machine-outil selon l'une des revendications 1 à 3, **caractérisée en ce que** le dispositif de prélèvement comprend un dispositif de retenue (22) pour la pièce (17), qui est déplaçable, au moyen d'un dispositif d'avance (23), entre une position de prise sur le logement (18) et une position de repos au-dessus du logement (18).

5. Machine-outil selon la revendication 4, **caractérisée en ce que** lors du déplacement du dispositif de retenue (22) dans la position de prise, celui-ci parvient automatiquement en prise avec la pièce usinée (17).

6. Machine-outil selon la revendication 4 ou la revendication 5, **caractérisée en ce que** le dispositif de retenue (22) en position de repos tient librement suspendue la pièce usinée (17).

7. Machine-outil selon l'une des revendications 4 à 6, **caractérisée en ce que** le dispositif de retenue (22) comprend un crochet (44, 45) soumis à l'action d'un ressort qui, lors du déplacement du dispositif de retenue (22) dans la position de prise, parvient automatiquement en prise avec la pièce usinée (17).

8. Machine-outil selon l'une des revendications 4 à 7, **caractérisée en ce que** le dispositif de prélèvement (21) comprend un dispositif de verrouillage (31, 32, 33) qui maintient, par complémentarité de formes, le dispositif de retenue (22) dans sa position de repos.

9. Machine-outil selon la revendication 8, **caractérisée en ce que** le dispositif de verrouillage (31, 32, 33) comprend un crochet (32) soumis à l'action d'un ressort qui peut être désengagé du dispositif de retenue (22) par une unité à cylindre et piston (28).

10. Machine-outil selon l'une des revendications 1 à 9, **caractérisée en ce que** le dispositif de prélèvement (21) est conçu pour le prélèvement simultané de deux pièces (17) ou plus usinées parallèlement.

11. Machine-outil selon l'une des revendications 4 à 10, **caractérisée en ce que** le dispositif d'avance (23) comporte une construction portante (26) fixée à la machine-outil (10) sur laquelle le dispositif de retenue (22) est supporté coulissant entre deux positions de fin de course, de préférence par une unité à cylindre et piston (28).

12. Machine-outil selon l'une des revendications 4 à 11, **caractérisée en ce que** le dispositif de prélèvement (21) comporte au moins un élément d'amortissement (35, 36) qui amortit le dispositif de retenue (22) dans son mouvement, à l'approche de la position de prise et/ou position de repos.

13. Machine-outil selon l'une des revendications 4 à 12, **caractérisée en ce que** le compartiment de travail (11) est fermé par un habillage (12) dans lequel est prévue une ouverture (13) pouvant être fermée par une porte de commande, et le dispositif de retenue (22) dans sa position de repos tient la pièce usinée (17) dans la zone de l'ouverture (13).

14. Machine-outil selon l'une des revendications 1 à 13, **caractérisée en ce qu'**il est prévu un dispositif de lavage (62) automatique qui lave la pièce usinée (17) et/ou le logement (18) après que la pièce a été prélevée du logement (18).
